(19) **Europäisches Patentamt**

**European Patent Office**

**Office européen des brevets**

(11) **EP 1 551 070 A1**

(12) **EUROPEAN PATENT APPLICATION**
published in accordance with Art. 158(3) EPC

(43) Date of publication:
**06.07.2005 Bulletin 2005/27**

(51) Int Cl.7: **H01M 4/66**, H01M 4/70

(21) Application number: **02807758.4**

(22) Date of filing: **29.08.2002**

(86) International application number:
**PCT/JP2002/008715**

(87) International publication number:
**WO 2004/023584 (18.03.2004 Gazette 2004/12)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Toyo Kohan Co., Ltd.
Tokyo 102-8447 (JP)**

(72) Inventors:
• **OKAMURA, Takaaki,
Toyo Kohan Co., Ltd. Technical
Kudamatsu-shi, Yamaguchi 744-8611 (JP)**

• **HIRAKAWA, Shinsuke,
Toyo Kohan Co., Ltd. Technical
Kudamatsu-shi, Yamaguchi 744-8611 (JP)**
• **DOI, Hiroshi, c/o Toyo Kohan Co., Ltd. Technical
Kudamatsu-shi, Yamaguchi 744-8611 (JP)**
• **TAKAGI, Kenichi, c/o Toyo Kohan Co., Ltd.
Chiyoda-ku, Tokyo 102-8447 (JP)**

(74) Representative: **VOSSIUS & PARTNER
Siebertstrasse 4
81675 München (DE)**

(54) **COMPOSITE CURRENT COLLECTOR**

(57)     A current collector effective for reductions in weight and thickness. The current collector produced by forming a conductive layer having a surface electric resistance not higher than 1.3 $\Omega$/cm on the surface of a resin film and then forming an electrolytic plating layer having a thickness of at least 0.3 $\mu$m per one side, **characterized in that** the surface electric resistance is not higher than 40 m$\Omega$/cm after electrolytic plating and following expression is satisfied; $Y1+Y2+Y3 \leqq 0.8 \times ((X1+X2+X3) \times Y3/X3)$ where, X1: thickness of resin film ($\mu$m), X2: thickness of conductive layer ($\mu$m), X3: thickness of plating layer ($\mu$m), Y1: weight of resin film (mg/cm$^2$), Y2: weight of conductive layer (mg/cm$^2$), and Y3: weight of plating layer (mg/cm$^2$).

Fig.1

**Description**

Technical Field

The present invention relates to a composite current collector used in a lithium system secondary battery and the like.

Background Art

In recent years, as an electronic equipment such as telephone, personal computer and video camera is made portable, the electronic equipment of each kind is made small in size, so that it is strongly demanded to reduce a weight of a built-in secondary battery such as lithium system or nickel-hydrogen system.

For example, a lithium secondary battery comprises a negative electrode plate in which the above negative electrode material is retained by a negative electrode current collector that is a backing of the negative electrode material, a positive electrode plate in which a positive electrode active material reversibly performing an electrochemical reaction with lithium ions like lithium-cobalt composite oxide is retained by a positive electrode current collector that is a backing of the positive electrode active material, and a separator retaining an electrolysis solution and preventing a short circuit of both electrodes by being interposed between the negative electrode plate and the positive electrode plate.

And, in a case of the battery of *tanzaku* shape or cylindrical shape, the above positive electrode plate, separator and negative electrode plate are molded into thin sheets or foils, and they are stacked in layers in order and accommodated in a battery case while being wound spirally.

Accordingly, generally the electrode plate is manufactured by mixing an active material or a host material with an organic binder, a conductive agent and a solvent to thereby make them into a paste-like one and, after it has been applied to a backing surface and dried, pressure-molding it together with the backing in a thickness direction.

Hitherto, as the current collector of the electrode plate, from the fact that an electrical conductivity of itself is necessary, the foil of a metal such as copper and aluminum has been used.

In order to reduce a weight of such a battery, it is necessary and indispensable to reduce the weight of the current collector which occupies a considerable portion of a total battery weight. For example, in a lithium-polymer battery, only with the negative electrode current collector, there is occupied such a weight of about 20% or so of the total battery weight that is the same degree as the negative electrode active material, so that the reduction in weight of the current collector has a large advantage in reducing the weight of the battery.

As an attempt to reduce the weight of the current collector, as described in JP-A-5-31494 Gazette for instance, there is proposed a method of vapor-depositing or sputtering a metal to a resin to thereby stack a very thin film in layer. However, in this method, as to an upper limit of a stacked layer thickness of the metal, about 2000 angstrom is the limit from viewpoints of an economical efficiency and a heat resistance of the resin, it is obliged to make the conductive layer into a very thin metal layer, not only a current collecting ability is evidently inferior but also the very thin metal layer is partially dissolved and disappears by a corrosion in the battery due to an elapse of time, thus the current collecting ability more reduces, and so on, so that it has been never one capable of being presented to a practical use.

A subject of the present invention is to solve the above-mentioned problems of the conventional current collector, and provide a composite current collector of the resin and the metal, whose weight can be more reduced than a metal foil. Additionally, it is to provide a composite current collector capable of corresponding also to a demand for reducing a thickness.

Disclosure of the Invention

A composite current collector set forth in claim 1 is a composite current collector in which, after forming on a surface of a resin film a conductive treatment layer whose surface electric resistance is not higher than 1.3 $\Omega$/cm by performing a conductive treatment, a plating layer whose thickness is at least 0.3 $\mu$m per one face is formed by an electrolytic plating treatment, and
    is characterized in that the surface electric resistance after the electrolytic plating is not higher than 40 m$\Omega$/cm, and additionally following expression is satisfied:

$$Y1 + Y2 + Y3 \leq 0.8 \times ((X1 + X2 + X3) \times Y3/X3)$$

where

X1: thickness of resin film ($\mu$m)
X2: thickness of conductive treatment layer ($\mu$m)
X3: thickness of plating layer ($\mu$m)
Y1: weight of resin film (mg/cm$^2$)
Y2: weight of conductive treatment layer (mg/cm$^2$)
Y3: weight of plating layer (mg/cm$^2$).

A composite current collector set forth in claim 2 is additionally characterized in that a tensile strength satisfies at least 0.8 kg/cm.

Composite current collectors set forth in claims 3 and 4 are additionally characterized in that the conductive treatment layer is made a conductive painted film formed by applying a conductive paint and curing it, and made a very thin metal thin film formed by a vapor deposition or a sputtering of a metal.

A composite current collector set forth in claim 5 is additionally characterized in that the conductive painted film is made by blending a conductive agent comprising one or at least two of Cu, Ag, Ni and conductive carbon to a resin, and a composite current collector set forth in claim 6 is characterized in that the very thin metal thin film comprises one or at least two of Cu, Ag, Ni and Al. A composite current collector set forth in claim 7 is characterized in that the plating layer is one whose main component is Cu, Ni or Al.

A composite current collector set forth in claim 8 is characterized in that the resin film is wavy or one in whose surface there has been formed a irregularities pattern.

A composite current collector set forth in claim 9 is characterized in that after forming conductive treatment layers on both faces of a resin film having many through-holes and forming a plating layer on the conductive treatment layer by an electrolytic plating treatment, a surface electric resistance is not higher than 40 m$\Omega$/cm, a tensile strength higher than 0.8 kg/cm and a front/back current-carrying resistance not higher than 100 m$\Omega$/cm, and additionally following expression (2) is satisfied:

$$Y1 + Y2 + Y3 \leq 0.8 \times (X1 + X2 + X3) \times Y3/X3 \tag{2}$$

where

X1: is thickness of resin film ($\mu$m),
X2: thickness of conductive treatment layer ($\mu$m),
X3: thickness of plating layer ($\mu$m),
Y1: weight of resin film (mg/cm$^2$),
Y2: weight of conductive treatment layer (mg/cm$^2$),
Y3: weight of plating layer (mg/cm$^2$).

A composite current collector set forth in claim 10 is characterized in that the through-hole is filled by the conductive treatment layer.

A composite current collector set forth in claim 11 is characterized in that the conductive treatment layer is formed also in a section of the through-hole, and additionally a plating layer is formed in an upper layer of the conductive treatment layer.

A composite current collector set forth in claim 12 is characterized in that the plating layer set forth in claim 9 or 11 is one whose main component is Cu, Ni or Al.

A composite current collector set forth in claim 13 is characterized in that the resin film set forth in claim 9 is wavy or one in whose surface there has been formed a irregularities pattern.

Brief Description of the Drawings

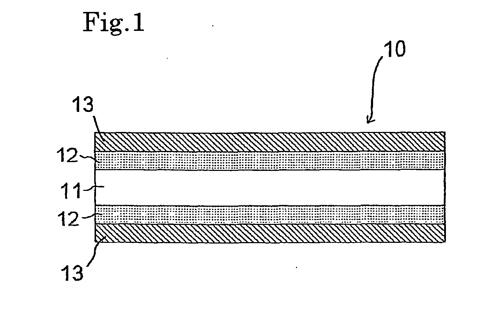

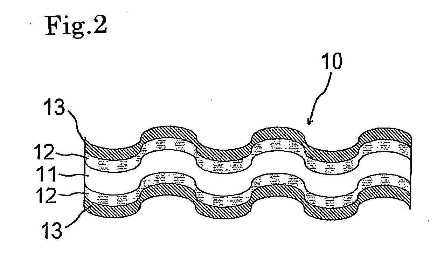

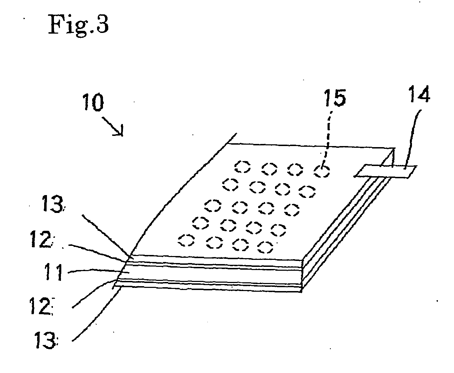

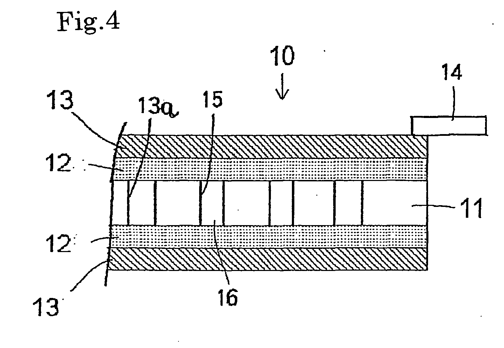

Fig. 1 is a sectional view showing a 1st embodiment of a composite current collector of the present invention. Fig. 2 is a sectional view showing a 2nd embodiment of the composite current collector of the present invention. Fig. 3 is an external appearance perspective view of the composite current collector of the present invention. Fig. 4 is a main part sectional view of the composite current collector in Fig. 3.

Best Mode for Carrying Out the Invention

The composite current collector of the present invention is explained in detail by using the drawings. Fig. 1 is a sectional view showing the 1st embodiment of the composite current collector of the present invention. Fig. 2 is a sectional view showing the 2nd embodiment of the composite current collector of the present invention. Fig. 3 is an external appearance perspective view of the composite current collector of the present invention, and Fig. 4 is a main part sectional view of the composite current collector in Fig. 3.

(1st embodiment)

A light weight current collector of the present invention is one in which a remarkable reduction in weight of the current collector has been achieved without impairing the economical efficiency while having a current collecting property and a durability which are approximately equivalent to a metal foil current collector used hitherto.
That is, as shown in Fig. 1, a light weight current collector 10 of the present invention has a constitution in which, after forming a conductive treatment layer 12 onto a resin film 11, thereon there has been formed a plating layer 13.
As examples of a material of the resin film 11, there are enumerated polyethylene terephthalate (PET), polyethylene naphthalate (PEN), polypropylene (PP), polyethylene (PE), acid-denatured olefin resin denatured by acrylic acid or maleic acid etc., and the like.
Further, the material of the resin film 11 is deemed to be determined by a kind and a demanded performance of the battery, and not one limited especially to the above.
As a thickness of the resin film 11, although it is 2 $\mu$m - 20 $\mu$m in general, it is deemed to be determined by considering characteristics, e.g., mechanical strength, reduction in weight and reduction in thickness, demanded as the current collector of the battery, and here it is not limited especially.
Further, also as to whether the resin film is stretched or not stretched or a crystallinity index, it is not one limited especially. However, generally, in a case where the mechanical strength is demanded for the current collector, it is desirable to use the stretched film and, in a case where an adhesion to the conductive treatment layer is demanded, it is desirable to use the non-stretched film and a film of low crystallinity index.
The conductive treatment layer 12 is provided for forming the plating layer 13 mentioned later onto the resin film 11. The conductive treatment layer 12 can be made into a very thin metal thin film layer in which a metal, mainly such as Cu, Ni and Ag, having the electrical conductivity has been formed by means such as vapor deposition and sputtering for instance.
Further, it can be made into also a conductive painted film layer formed by thinly coating to the resin film a conductive paint whose main components are a metal powder of Cu, Ni, Ag and the like, a carbon powder of the conductive agent, and the like, or a conductive paint in which one or at least two of the formers has or have been mixed.
Additionally, in compliance with a necessity, it can be made into also a composite layer in which the conductive painted film layer has been formed on the above very thin metal thin film layer. As to a metal used in a formation of the very thin metal thin film layer of the composite layer concerned, also Al which is liable to be eroded by a plating solution and whose application is not easy becomes easily applicable by a barrier effect of the conductive painted film of an upper layer.
On the occasion of the above coating, it is formed by preparing a solution by mixing a vehicle (for example, epoxy phenol resin) and the conductive agent, and thereafter applying it to one face or both faces of the resin film 11 and drying it.
A thickness of the conductive treatment layer 12 is coated such that a surface electric resistance that it has becomes not higher than 1.3 $\Omega$/cm.
This is because, if the surface electric resistance exceeds 1.3 $\Omega$/cm, the formation of the electrolytic plating layer 13 formed thereon becomes difficult.
Next, in an upper layer of the above conductive treatment layer 12, there is formed the plating layer 13 formed by an electrolysis. As a kind of the plating layer 13, there is enumerated one plated by electrolyzing the metal such as Cu and Ni.
In a case where it is used as the negative electrode current collector of a lithium system secondary battery, it is desirable that it is the plating layer whose main component is Cu and, in a case where it is used as the positive electrode current collector, it is desirable that it is the plating layer whose main component is Al and, in a case where it is used as the positive/negative electrode current collector of an Ni - MH system secondary battery, it is desirable that it is the plating layer whose main component is Ni. This is because these metals have respectively field-proven results widely used.
It is desirable that a thickness of each of these plating layers 13 is made such that the surface electric resistance of the material after the plating becomes not higher than 40 m$\Omega$/cm.

Incidentally, the surface electric resistance in the present invention is a value obtained by measuring an electric resistance by contacting + and - terminals with a spacing of 1 cm being provided on a measurement face of a sample of 1 cm width after forming the conductive treatment layer or after forming the plating layer thereafter.

When measuring the electric resistance value, it is desirable that a non-measurement face is covered by an insulating tape and the like such that the + and - terminals don't contact.

Incidentally, it is desirable that each of the resin film, the conductive treatment layer and the plating layer, which are constituent elements of the current collector, satisfies a relation of following expression.

$$Y1 + Y2 + Y3 \leq 0.8 \times ((X1 + X2 + X3) \times Y3/X3)$$

where

X1: thickness of resin film ($\mu$m)
X2: thickness of conductive treatment layer ($\mu$m)
X3: thickness of plating layer ($\mu$m)
Y1: weight of resin film (mg/cm$^2$)
Y2: weight of conductive treatment layer (mg/cm$^2$)
Y3: weight of plating layer (mg/cm$^2$)

The above expression is a conditional expression by which the current collector of the present invention can be reduced in weight in comparison with a conventional current collector consisting only of the metal, by specifying a relation among the resin film, the conductive treatment layer and the plating layer.

Concretely, it is the conditional expression which makes it possible to reduce a weight of the current collector of the present invention to not larger than 0.8 in the same thickness than the mere metal current collector whose plating layer consists only of the metal component, and making it not larger than 0.8 is a user demand as well.

A matter necessary in the present invention in which the resin film has been used is the fact that a tensile strength of the composite current collector is at least 0.8 kg/cm. If the tensile strength concerned becomes lower than 0.8 kg/cm, the current collector becomes inevitably undurable to a tension necessary when assembling the battery by using the current collector concerned, so that it is not desirable because a problem that it ruptures becomes liable to occur. Incidentally, the tensile strength mentioned here indicates a yield point strength when the composite current collector has been cut in 1 cm width and 10 cm length and it has been pulled at a rate of 20 mm/minute.

Incidentally, when applying the above expression, the thickness of the conductive treatment layer in the current collector of the invention, which has been subjected to an embossing mentioned later, is made a thickness of the treatment layer concerned before the emboss, and the thickness of the plating layer is made a thickness of an emboss convex part.

(2nd embodiment)

Depending on a use, the resin film 11 that is a carrier of the above plating layer 13 is not flat one and, as shown in Fig. 2 for instance, is one having a wavy undulation or one in whose surface there have been formed irregularities.

By being made in such a shape, the current collecting ability increases for such reasons that an area of the current collector is enlarged and a mean distance between the current collector and the active material becomes short, so that it is possible to contribute to an improvement in battery performance.

Further, it is also possible to intend an anchoring effect of the active material contacting with a surface of the current collector, and thus the adhesion to the active material can be improved, so that it is possible to contribute to a promotion of a chemical reaction in the battery.

Making the wavy form and the formation of the irregularities of the resin film 11 can be performed, for example, by the embossing which pressure-bonds upper and lower faces of the resin film 11 by using a hot roll in which an emboss pattern has been formed, after forming the conductive treatment layer 12 on a surface of the resin film 11.

And, thereafter, the plating layer 13 is formed by applying an electroplating onto the conductive treatment layer 12.

In the conventional metal current collector, from the fact that the hot embossing is difficult, it follows that a mechanical plastic deformation working is carried out in order to form a pattern of the irregularities to the carrier, but the mechanical plastic deformation working is not easy because a crack occurs in the metal, the shape becomes non-uniform or, even if the embossing is performed, the emboss disappears in a process such as active material application, and so forth. Also from this point, the 2nd embodiment of the present invention is great in its utilization possibility. The material conditions other than the fact that the resin film is one having the wavy undulation or one in whose surface there have been formed irregularities are similar to the 1st embodiment.

(3rd embodiment)

As shown in Fig. 3, in the composite current collector 10 of the present invention, there are formed the conductive treatment layers 12 on both surfaces of the resin film 11, that is the carrier (core body), having through-holes and the metal plating layers 13 on the conductive treatment layers, and a lead wire 14 is formed in one face of the composite current collector 10.

Additionally, as shown in Fig. 4, in the resin film becoming the core body forming the composite current collector 10 of the present invention, many through-holes 15 penetrating through the resin film 11 are formed and, in front layers of the through-hole 15, there is formed a conduction body 16 conducting between the front/back conductive treatment layers 12. Like this, by having the through-holes, a front/back conduction property becomes good, and a junction of the lead wire may be made in either of front/back faces, so that it is possible to intend an additional reduction in weight.

Next, as examples of the material of the resin film 11 used for the core body of the 3rd embodiment, similarly to the 1st and 2nd embodiments there are desirably enumerated polyethylene terephthalate (PET), polyethylene naphthalate (PEN), polypropylene (PP), polyethylene (PE), acid-denatured olefin resin denatured by acrylic acid or maleic acid etc., and the like. However, in the present invention, they are not limited to the above materials, and ones determined by the kind and the demanded performance of the battery, and the like.

Further, as the thickness of the resin film 11, although there is used one in a range of 2 μm - 20 μm in general, it is one determined by considering characteristics, e.g., mechanical strength, reduction in weight, reduction in thickness and the like, demanded as the current collector of the battery, and not one limited especially.

Additionally, also as to whether the resin film 11 is stretched or not stretched or the crystallinity index, it is not one limited especially. However, generally, in the case where the mechanical strength is demanded for the current collector, it is desirable to use the stretched film and, in the case where the adhesion to the conductive treatment layer 12 is demanded, it is desirable to use the resin film which is a non-stretched film and whose crystallinity index is low.

The resin film 11 as the core body used in the 3rd embodiment of the present invention has such many through-holes 15 as shown in Fig. 3 and Fig. 4.

The trough-hole 15 becomes a conductive passage between the front/back metal plating layers 13 formed, after forming the conductive treatment layers 12 on both faces of the resin film 11, thereon additionally. For this reason, such a state is desirable that the front/back metal plating layers are contiguous not only merely to the front/back but also to a hole inside by forming the conductive treatment layer till the hole inside by an extension etc. at a plating time. Further, if the hole inside is filled by the conductive treatment layer, it is desirable because the conduction between the front/back metal plating layers is performed. In this case, it has been found that, unless the electric resistance between the front/back is not higher than a certain level, there is no effect. That is, as mentioned later, it is good that a front/back current-carrying resistance is made not higher than 100 mΩ.

As to a number and a hole diameter of the through-hole 15, they should be determined by considering a current-carrying property between the front/back metal plating layers 13, a mechanical strength, a manufacturing property and the like, and are not ones defined especially here.

The trough-holes 15 of the resin film 11 can be formed by passing the resin film through between rolls to which diamonds have been adhered or rolls provided with many heated needles, blanking the resin film by a press working by small diameter punches, or stretching the resin film lengthwise and breadthwise.

However, the through-holes 15 can be formed by a method other than the above methods, and its working method is not defined especially. Further, the holes may be formed before forming the conductive treatment layer, or after forming the same.

Next, the conductive treatment layers 12 formed on the resin film 11 are ones provided for forming through the conductive treatment layers 12 the plating layers 13 mainly on both faces of the resin film 11 in front/back upper layers of the conductive treatment layers.

If the conductive treatment layer is formed also inside (section) of the through-hole 15 of the resin film 11, a metal plating layer 13a which electrically junctions the front/back plating layers 13 becomes liable to be formed also in the inside of the hole, so that it is an effective method.

In this 3rd embodiment, an important matter is that the current-carrying resistance of front/back (here, referred to as front/back current-carrying resistance) is made not higher than 100 mΩ. If the front/back current-carrying resistance exceeds 100 mΩ, in a case where the lead wire 14 is junctioned only to one face of the composite current collector, a current collecting property of non-junctioned face is extremely inferior, so that this is not desirable because it becomes a factor reducing the battery performance.

The front/back current-carrying resistance mentioned in the present invention is a value obtained by measuring the electric resistance by sufficiently contacting a + terminal of a size of 1 cm x 1 cm with one face of the composite current collector cut in 1.5 cm x 1.5 cm and a - terminal of a size of 1 cm x 1 cm with the other face in the same position as a position where the + terminal exists while applying a load of 1 kg/cm$^2$ in both.

A formation of the conductive treatment layer 12 can be performed by making the metal, mainly such as Cu, Ni, Al and Ag, having the electrical conductivity into the very thin metal thin film layer by means such as vapor deposition and sputtering for instance.

Further, the formation of the conductive treatment layer 12 can be performed also by thinly coating onto the front/back of the resin film 11 formed with the through-holes 15 the conductive paint whose main components are the metal powder of Cu, Ni, Al, Ag and the like, the carbon powder of the conductive agent, and the like, or the conductive paint in which one or at least two of the formers has or have been mixed, or the like, thereby making it into the conductive painted film layer, but it should be selected by the demanded performance.

Additionally, in compliance with a necessity, it can be made also into a composite layer in which the conductive painted film layer has been formed by means such as the above coating on the very thin metal thin film layer formed by the above means such as vapor deposition and sputtering, or a composite layer in which the above very thin metal thin film layer has been formed on the above conductive painted film layer.

Further, also the fact that, after the inside of the through-hole 15 has been filled (closed) by the above metal powder or carbon powder etc., the very thin metal thin film layers are formed on the front/back of the resin film 11 to thereby make them into the conductive treatment layers 12 is effective for electrically junctioning the front/back metal plating layers 13 each other.

It is desirable that the thickness of the conductive treatment layer 12 is formed such that the surface electric resistance that it has becomes not higher than 1.3 $\Omega$/cm. This is because, if the surface electric resistance exceeds 1.3 $\Omega$/cm, a uniform formation of the metal plating layer 13 formed thereon becomes difficult.

Next, in an upper layer of the above conductive treatment layer 12, there is formed the plating layer 13 by an electrolytic plating treatment. As the kind of the metal forming the plating layer, there is enumerated one plated by electrolyzing the metal such as Cu, Ni and Al, but it should be selected by the demanded performance.

It is general that, in the case where the composite current collector of the present invention is used as for the negative electrode as the current collector of the lithium system secondary battery, there is formed the plating layer whose main component is Cu and, in the case where it is used as the positive electrode, there is formed the metal plating layer whose main component is Al and, in the case where it is used as the current collector for the positive/ negative electrode of the Ni - MH system secondary battery, there is formed the metal plating layer whose main component is Ni.

It is desirable that the thickness of each of these plating layers 13 is made such that the surface electric resistance of the metal plating layer after the plating becomes not higher than 40 m$\Omega$/cm.

Its reason is because, if the surface electric resistance concerned exceeds 40 m$\Omega$/cm, even if it is used for the current collector for a small secondary battery, i.e., even if it is a use in which a length of the current collector used is short, a loss of battery energy by the resistance becomes so great that it cannot be neglected.

Further, also in the composite current collector 10 of the 3rd embodiment, similarly to the 1st and 2nd embodiments, it is necessary that each of the resin film 11 having the through-holes, the conductive treatment layer 12 and the plating layer 13, which are the constituent elements of the composite current collector 10, satisfies the relation of following expression (2).

$$Y1 + Y2 + Y3 \leq 0.8 \text{ x } (X1 + X2 + X3) \text{ x } Y3/X3 \tag{2}$$

where

X1: is thickness of resin film ($\mu$m),
X2: is thickness of conductive treatment layer ($\mu$m),
X3: is thickness of metal plating layer ($\mu$m),
Y1: is weight of resin film (mg/cm$^2$),
Y2: is weight of conductive treatment layer (mg/cm$^2$),
Y3: is weight of metal plating layer (mg/cm$^2$).

Incidentally, each of the thicknesses X1 - X3 mentioned here denotes the thickness in a part where no holes are formed.

The above expression (2) is the conditional expression by which the composite current collector of the present invention can be reduced in weight in comparison with the conventional current collector consisting only of the metal, by specifying the relation among the resin film, the conductive treatment layer and the plating layer.

More concretely, it is also the conditional expression which makes it possible to realize the reduction in weight of the composite current collector of the present invention to not larger than 80 percent in the same thickness than the mere metal current collector whose metal plating layer consists only of the metal component.

Further, the matter necessary in the present invention in which the resin film having the through-holes has been used is the fact that the tensile strength of the composite current collector thus obtained is at least 0.8 kg/cm. If the tensile strength concerned becomes lower than 0.8 kg/cm, the current collector becomes inevitably undurable to the tension necessary when assembling the battery by using the current collector concerned, so that it is not desirable because the problem that it ruptures becomes liable to occur. Incidentally, the tensile strength mentioned here is examined similarly to the method shown in the 1st embodiment. Other material conditions are similar to the 1st embodiment.

Incidentally, the composite current collector of the present invention is unnecessary to be limited to planar one and, depending on a demand, may be wavy or one in whose surface there has been formed an irregularities pattern.

Examples

(Example 1)

As the resin film, a PET film of 4 $\mu$m thickness (X1 = 4) was used, and an Ag system paint in which Ag powder of 0.5 $\mu$m in mean particle diameter had been blended as the conductive agent was applied to both faces of the PET film respectively in 0.5 $\mu$m in its dry thickness, and was dried (X2 = 1).

Additionally, to its both faces, Cu was plated in 2 $\mu$m thickness (X3 = 4).

A weight of the PET film in this case was 0.564 mg/cm$^2$ (Y1 = 0.564), a weight of the conductive treatment layer applied with the Ag system paint 0.547 mg/cm$^2$ (Y2 = 0.547), and a weight of the Cu plating 3.572 mg/cm$^2$ (Y3 = 3.572).

(Example 2)

As the resin film, the PET film of 4 $\mu$m thickness (X1 = 4) was used, and the Ag system paint similar to the Example 1 was applied to both faces of the PET film respectively in 0.5 $\mu$m in its dry thickness, and was dried (X2 = 1).

Additionally, to its both faces, Cu was plated in 0.3 $\mu$m thickness (X3 = 0.6).

A weight of the PET film in this case was 0.564 mg/cm$^2$ (Y1 = 0.564), a weight of the conductive treatment layer applied with the Ag system paint 0.547 mg/cm$^2$ (Y2 = 0.547), and a weight of the Cu plating 0.536 mg/cm$^2$ (Y3 = 0.536).

(Example 3)

As the resin film, the PET film of 14 $\mu$m thickness (X1 = 14) was used, and the Ag system paint similar to the Example 1 was applied to both faces of the PET film respectively in 0.5 $\mu$m in its dry thickness, and was dried (X2 = 1).

Additionally, to its both faces, Cu was plated in 4 $\mu$m thickness (X3 = 8).

A weight of the PET film in this case was 1.974 mg/cm$^2$ (Y1 = 1.974), a weight of the conductive treatment layer applied with the Ag system paint 0.547 mg/cm$^2$ (Y2 = 0.547), and a weight of the Cu plating 7.144 mg/cm$^2$ (Y3 = 7.144).

(Example 4)

As the resin film, the PET film of 4 $\mu$m thickness (X1 = 4) was used, and an Ni system paint in which Ni powder of 0.7 $\mu$m in mean particle diameter had been blended as the conductive agent was applied to both faces of the PET film respectively in 2 $\mu$m in its dry thickness, and was dried (X2 = 4).

Additionally, to its both faces, Ni was plated in 1 $\mu$m thickness (X3 = 2).

A weight of the PET film in this case was 0.564 mg/cm$^2$ (Y1 = 0.564), a weight of the conductive treatment layer applied with the Ni system paint 1.288 mg/cm$^2$ (Y2 = 1.288), and a weight of the Ni plating 0.568 mg/cm$^2$ (Y3 = 0.568).

(Example 5)

As the resin film, the PET film, formed with the emboss pattern, of 4 $\mu$m thickness (X1 = 4) was used, and the Ag system paint similar to the Example 1 was applied to both faces of the PET film respectively in 1 $\mu$m in its dry thickness, and was dried (X2 = 2).

Additionally, to its both faces, Cu was plated in 2 μm thickness (X3 = 4).

A weight of the PET film in this case was 0.564 mg/cm$^2$ (Y1 = 0. 564), a weight of the conductive treatment layer applied with the Ag system paint 1.054 mg/cm$^2$ (Y2 = 1.054), and a weight of the Cu plating 3.672 mg/cm$^2$ (Y3 = 3.672).

(Example 6)

As the resin film, an olefin film denatured by maleic acid of 14 μm thickness (X1 = 14) was used, and the Ag system paint similar to the Example 1 was applied to both faces of the olefin film respectively in 0.5 μm in its dry thickness, and was dried (X2 = 1).

Additionally, to its both faces, Cu was plated in 2 μm thickness (X3 = 4).

A weight of the olefin film in this case was 0.372 mg/cm$^2$ (Y1 = 0.372), a weight of the conductive treatment layer applied with the Ag system paint 0. 547 mg/cm$^2$ (Y2 = 0.547), and a weight of the Cu plating 3.572 mg/cm$^2$ (Y3 = 3.572).

(Example 7)

As the resin film, the PET film of 4 μm thickness (X1 = 4) was used, and vapor deposition layers of Cu were formed on both faces of the PET film respectively in 500 angstrom (X2 = 0.1).

Additionally, to its both faces, Cu was plated in 2 μm thickness (X3 = 4).

A weight of the PET film in this case was 0.564 mg/cm$^2$ (Y1 = 0.564), a weight of the conductive treatment layer vapor-deposited with Cu 0.047 mg/cm$^2$ (Y2 = 0.047), and a weight of the Cu plating 3.572 mg/cm$^2$ (Y3 = 3.572).

(Example 8)

As the resin film, the PET film, in which circular holes of 5 μm diameter had been formed by 50% in its ratio of hole area, of 4 μm thickness (X1 = 4) was used, and the Ag system paint similar to the Example 1 was applied to both faces of the PET film respectively in 0.5 μm in its dry thickness, and was dried (X2 = 1).

Additionally, to its both faces, Cu was plated in 1 μm thickness (X3 = 2).

A weight of the PET film in this case was 0.282 mg/cm$^2$ (Y1 = 0.282), a weight of the conductive treatment layer applied with the Ag system paint 0.305 mg/cm$^2$ (Y2 = 0.305), and a weight of the Cu plating 1.82 mg/cm$^2$ (Y3 = 1.82).

One in which the above Examples 1 - 8 were collected is described in Table 1.

(Example 9)

As the resin film, a biaxially oriented PET film (X1 = 4), in which circular through-holes of 5 μm diameter had been formed by 20/mm$^2$, of 4 μm thickness was used, and vapor deposition layers of Cu were formed on both faces of the PET film respectively in 500 angstrom and thereby made into the conductive treatment layers (X2 = 0.1).

Additionally, to its both faces, Cu was plated in 2 μm thickness and thereby the metal plating layers (X3 = 4) were formed, so that the composite current collector was obtained. Y1 - Y3 in this case were as shown in Table 2..

(Example 10)

As the resin film, the biaxially oriented PET film (X1 = 20), in which circular through-holes of 15 μm diameter had been formed by 16/mm$^2$, of 20 μm thickness was used, and the Ag system paint in which Ag powder of 0.5 μm in mean particle diameter had been blended as the conductive agent was applied to both faces of the PET film and dried to thereby fill the hole part, and the conductive treatment layers (X2 = 1) of respectively 0.5 μm in its dry thickness were formed, so that the composite current collector was obtained.

Additionally, to its both faces, Cu was plated in 2 μm thickness and thereby the metal plating layers (X3 = 4) were formed. Y1 - Y3 in this case were as shown in Table 2.

(Example 11)

As the resin film, the biaxially oriented PET film (X1 = 4), in which quadrangle through-holes of 50 μm diameter in one side had been formed by 9/mm$^2$, of 4 μm thickness was used, and the Ni system paint in which Ni powder had been blended as the conductive agent was applied to both faces of the PET film and dried, and thereby the conductive treatment layers (X2 = 1) of respectively 0.5 μm in its dry thickness were formed. Also after the Ni system paint had been applied and dried, the holes were not closed by the filling of the paint concerned, and the through-holes were still recognized.

Additionally, to its both faces, Cu was plated in 2 $\mu$m thickness and thereby the metal plating layers (X3 = 4) were formed, so that the composite current collector was obtained. Y1 - Y3 in this case were as shown in Table 2.

(Example 12)

The composite current collector was obtained by performing similarly to the Example 9 except the fact that the metal plating layers (X3 = 2) of 1 $\mu$m were formed. Y1 - Y3 in this case were as shown in Table 2.

(Example 13)

The composite current collector was obtained by performing similarly to the Example 9 except the fact that the vapor deposition layers of Cu were formed on both faces of the PET resin film respectively in 1000 angstrom to thereby make them into the conductive treatment layers (X2 = 0.2), and on its both faces there were formed the Cu plating layers (X3 = 6) of 3 $\mu$m. Y1 - Y3 in this case were as shown in Table 2.

(Example 14)

The composite current collector was obtained by performing similarly to the Example 9 except the fact that the resin film was a biaxially oriented polypropylene (X1 = 12) denatured by acrylic acid of 6 $\mu$m. Y1 - Y3 in this case were as shown in Table 2.

(Example 15)

The composite current collector was obtained by performing similarly to the Example 10 except the fact that the resin film was the biaxially oriented PET film (X1 = 20) of 20 $\mu$m, and the metal plating layers (X3 = 4) were formed by plating A1 of 2 $\mu$m to both faces. Y1 - Y3 in this case were as shown in Table 2.

(Comparative example 1)

The composite current collector was obtained by performing similarly to the Example 2 except the fact that as the resin film there was used the biaxially oriented PET film (X1 = 20) which had no holes and whose thickness was 20 $\mu$m. Incidentally, in the composite current collector concerned, there were recognized no through-holes not only before the plating but also after the plating.

(Method of evaluating composite current collector performance index)

1. Examples 1 - 14 and Comparative example 1

The Li system secondary battery was made by a usual method by using, as the positive electrode, one in which the active material comprising a composition of $LiCoO_2$ : acetylene black : PVDF = 100 : 8 : 12 (weight ratio) was stacked in layer on an Al foil (20 $\mu$m) whose width was 5 cm and length 20 cm, using, as the negative electrode, one in which the active material (20 mg/cm$^2$) comprising a composition of graphite : PVDF = 100 : 11 (weight ratio) was stacked in layer on the composite current collector, of each of the Examples 1 - 6 and the Comparative example, whose width was 5 cm and length 20 cm, using, as the electrolysis solution, one in which $LiClO_4$ was added by 1 mol/ L to a solution formed by blending propylene carbonate and ethylene carbonate in an equal weight ratio, using a fine porous polypropylene system separator by a usual method, and junctioning a lead comprising Al (60 $\mu$m) whose width was 0.5 cm and length 8 cm to a width direction of an end of the current collector of the positive electrode and, similarly, a lead comprising Cu (60 $\mu$m) whose width was 0.5 cm and length 8 cm to a width direction of an end of the current collector of the negative electrode. After the battery concerned had been left intact in an atmosphere of 60°C for one month, a constant-current charge/discharge was performed under conditions of a charge termination voltage = 4.2 V, a discharge termination voltage = 2 V and a charge/discharge speed = 0.2 C, and a discharge capacity (= battery capacity 1) was measured.

Further, a discharge capacity (= battery capacity 2) was measure by performing similarly to the above except the fact that, instead of the composite current collector of the present invention, there was used a current collector comprising only a metal, whose component was the same as the plating metal of the composite current collector and whose thickness was the same as the composite current collector.

Incidentally, the composite current collector performance index (there is a case where it is referred to as performance index) was calculated by following expression.

composite current collector performance index (%)

= battery capacity 1/battery capacity 2 x 100

Incidentally, here, it is a current value for terminating the charge or the discharge in 5 hours with a theoretical capacity of $LiCoO_2$ being made 135 mAh/g, and 0.2 C being supposed to charge/discharge in compliance with a theory.

2. Example 15

It was evaluated similarly to the above except the fact that, as the current collector of the positive electrode, there was used the composite current collector of the Example 15 instead of the Al foil and, as the current collector of the negative electrode, there was used the Cu foil (thickness 10 μm).

The surface electric resistances of the conductive treatment layers, before the Cu or Ni plating, of the composite current collectors of the Examples 1 - 15 were all not higher than 1.3 Ω/cm.

Further, the evaluation of the composite current collector produced in each of the Examples 1 - 15 was performed by making the battery by the electric resistance and a method shown below, and taking a ratio of the battery capacity which was obtained when the composite current collector of the present invention was used to the battery capacity which was obtained when a current collector whose thickness was the same and which comprised only the metal foil.

It was deemed that, when a value of the percentage concerned (referred to as composite current collector performance index) was at least 99.8%, the current collecting performance of the composite current collector was good.

The surface electric resistances of the composite current collectors were all not higher than 40 mΩ/cm. Further, as shown in Table 3, the performance indexes of the composite current collectors of the Examples were all at least 99.8%, and all good in the current collecting performance.

Table 1   Constitution of composite e current collector

| Example | X1 | X2 | X3 | Y1 | Y2 | Y3 | Y1+Y2+Y3 |
|---|---|---|---|---|---|---|---|
| Example 1 | 4 (PET) | 0.5/0.5=1 (Ag system) | 2/2=4 (Cu) | 0.564 | 0.547 | 3.572 | 4.683 |
| Example 2 | 11 (PET) | 0.5/0.5=1 (Ag system) | 0.3/0.3=0.6 (Cu) | 0.564 | 0.547 | 0.536 | 1.647 |
| Example 3 | 14 (PET) | 0.5/0.5=1 (Ag system) | 4/4=8 (Cu) | 1.974 | 0.547 | 7.144 | 9.665 |
| Example 4 | 4 (PET) | 2/2=4 (Ni system) | 1/1=2 (Ni) | 0.564 | 1.288 | 0.560 | 2.412 |
| Example 5 | 4 (emboss PET) | 1/1=2 (Ag system) | 2/2=4 (Cu) | 0.564 | 1.054 | 3.672 | 5.29 |
| Example 6 | 14 (olefin denatured by maleic acid) | 0.5/0.5=1 (Ag system) | 2/2=4 (Cu) | 0.372 | 0.547 | 3.572 | 4.491 |
| Example 7 | 4 (PET) | Cu vapor deposition layer (500 Å) | 2/2=4 (Cu) | 0.564 | 0.047 | 3.572 | 4.183 |
| Example 8 | 4 (50% open hole PET) | 0.5/0.5 (Ag system) | 1/1=2 (Cu) | 0.282 | 0.305 | 1.82 | 2.407 |

EP 1 551 070 A1

Table 2   Constitution of composite e current collector

| Example or Comparative example | X1 | X2 | X3 | Y1 | Y2 | Y3 | Y1+Y2+Y3 |
|---|---|---|---|---|---|---|---|
| Example 9 | 4 (PET) | 0.5/0.5=0.1 (Cu vapor deposition layer) | 2/2=4(Cu) | 0.56 | 0.09 | 3.57 | 4.22 |
| Example 10 | 20 (PET) | 0.5/0.5=1 (Ag system painted film) | 2/2=4(Cu) | 2.8 | 0.55 | 3.57 | 6.92 |
| Example 11 | 4 (PET) | 0.5/0.5=1 (Ni system painted film) | 2/2=4(Cu) | 0.56 | 0.33 | 3.57 | 4.46 |
| Example 12 | 4 (PET) | 0.05/0.05=0.1 (Cu vapor deposition) | 1/1=2(Cu) | 0.56 | 0.09 | 1.79 | 2.44 |
| Example 13 | 4 (PET) | 0.1/0.1=0.2 (Cu vapor deposition layer) | 3/3=6(Cu) | 0.56 | 0.18 | 5.36 | 6.1 |
| Example 14 | 6 (denatured polypropylene) | 0.5/0.5=0.1 (Cu vapor deposition layer) | 2/2=4(Cu) | 0.54 | 0.09 | 3.57 | 4.2 |
| Example 15 | 20 (PET) | 0.5/0.5=1 (Ag system painted film) | 2/2=4(Al) | 2.8 | 0.55 | 1.08 | 4.43 |
| Comparative example 1 | 20 (PET) | 0.5/0.5=1 (Ag system painted film) | 2/3=4(Cu) | 2.8 | 0.55 | 3.57 | 6.92 |

Table 3

| Example or Comparative Example | Characteristics of composite current collector | | | |
|---|---|---|---|---|
| | Characteristics of composite current collector | | | |
| | Surface electric resistance (mΩ/cm) | Tensile strength (kg/cm) | Front/back current-carrying resistance (mΩ) | Performance index |
| Example 1 | 12.0 | 5.2 | - | 99.95 |
| Example 2 | 8.9 | 14.8 | - | 99.82 |
| Example 3 | 7.7 | 15.3 | - | 99.98 |
| Example 4 | 9.3 | 5.2 | - | 99.87 |
| Example 5 | 6.4 | 5.0 | - | 99.92 |
| Example 6 | 5.3 | 5.6 | - | 99.96 |
| Example 7 | 7.8 | 5.2 | - | 99.93 |
| Example 8 | 12.5 | 2.6 | 7 | 99.84 |
| Example 9 | 8.6 | 2.6 | 8 | 99.92 |
| Example 10 | 9.2 | 3.1 | 17 | 99.94 |
| Example 11 | 9.8 | 2.6 | 85 | 99.93 |
| Example 12 | 19.4 | 1.4 | 14 | 99.85 |
| Example 13 | 6.2 | 3.3 | 6 | 99.97 |
| Example 14 | 8.7 | 2.2 | 12 | 99.91 |
| Example 15 | 10.6 | 2.9 | 21 | 99.89 |
| Comparative example 1 | 9.3 | 3.2 | measurement impossible | 49.95 |

Industrial Applicability

The current collector of the present invention has an advantage that it is possible to intend reductions in weight and thickness that are about 0.8 of the conventional current collector, thereby in turn leading to reductions in weight and thickness of the battery.

Further, the current collector of the present invention has an advantage that the embossing, the formation of the through-holes, and the like are possible, and thus it is possible to intend to enlarge an area of the current collector, so that the adhesion to the active material and the current collecting ability are improved. Additionally, in the composite current collector of the present invention, notwithstanding the fact that the resin film that is an insulator is used in the core body, the junction of the lead wire suffices if it is made to either of the front and back faces similarly to the metal foil by forming the through-holes, and moreover the reductions in weight and thickness are more possible than the metal foil.

**Claims**

1. A composite current collector in which, after forming on a surface of a resin film a conductive treatment layer whose surface electric resistance is not higher than 1.3 Ω/cm by performing a conductive treatment, a plating layer whose thickness is at least 0.3 μm per one face is formed by an electrolytic plating treatment,
   **characterized in that** the surface electric resistance after the electrolytic plating is not higher than 40 mΩ/cm, and additionally following expression is satisfied:

$$Y1 + Y2 + Y3 \leq 0.8 \times ((X1 + X2 + X3) \times Y3/X3)$$

where

X1: thickness of resin film ($\mu$m)
X2: thickness of conductive treatment layer ($\mu$m)
X3: thickness of plating layer ($\mu$m)
Y1: weight of resin film (mg/cm$^2$)
Y2: weight of conductive treatment layer (mg/cm$^2$)
Y3: weight of plating layer (mg/cm$^2$).

2.  A composite current collector set forth in claim 1, **characterized in that** a tensile strength is at least 0.8 kg/cm.

3.  A composite current collector set forth in claim 1, wherein the conductive treatment layer is a conductive painted film formed by applying a conductive paint and curing it.

4.  A composite current collector set forth in claim 1, wherein the conductive treatment layer is a very thin metal thin film formed by a vapor deposition or a sputtering of a metal.

5.  A composite current collector set forth in claim 3, wherein the conductive painted film is made by blending a conductive agent comprising one or at least two of Cu, Ag, Ni and conductive carbon to a resin.

6.  A composite current collector set forth in claim 4, wherein the very thin metal thin film comprises one or at least two of Cu, Ag, Ni and Al.

7.  A composite current collector set forth in claim 1, wherein the plating layer is one whose main component is Cu, Ni or Al.

8.  A composite current collector set forth in any of claims 1 - 2, wherein the resin film is wavy or one in whose surface there has been formed an irregularities pattern.

9.  A composite current collector in which conductive treatment layers are formed on both faces of a resin film having many through-holes, **characterized in that**, after forming a plating layer on the conductive treatment layer by an electrolytic plating treatment, a surface electric resistance is not higher than 40 m$\Omega$/cm, a tensile strength higher than 0.8 kg/cm and a front/back current-carrying resistance not higher than 100 m$\Omega$, and additionally following expression (2) is satisfied:

$$Y1 + Y2 + Y3 \leq 0.8 \times (X1 + X2 + X3) \times Y3/X3 \tag{2}$$

where

X1: thickness of resin film ($\mu$m),
X2: thickness of conductive treatment layer ($\mu$m),
X3: thickness of plating layer ($\mu$m),
Y1: weight of resin film (mg/cm$^2$),
Y2: weight of conductive treatment layer (mg/cm$^2$),
Y3: weight of plating layer (mg/cm$^2$).

10.  A composite current collector set forth in claim 9, **characterized in that** the through-hole is filled by the conductive treatment layer.

11.  A composite current collector set forth in claim 9, **characterized in that** the conductive treatment layer is formed also in a section of the through-hole, and additionally a plating layer is formed in an upper layer of the conductive treatment layer.

12.  A composite current collector set forth in claim 9 or 11, wherein the plating layer is one whose main component is Cu, Ni or Al.

13. A composite current collector set forth in claim 9, wherein the resin film is wavy or one in whose surface there has been formed an irregularities pattern.

Fig.1

Fig.2

Fig.3

Fig.4

EP 1 551 070 A1

## INTERNATIONAL SEARCH REPORT

| | International application No. |
|---|---|
| | PCT/JP02/08715 |

**A. CLASSIFICATION OF SUBJECT MATTER**
Int.Cl⁷ H01M4/66, H01M4/70

According to International Patent Classification (IPC) or to both national classification and IPC

**B. FIELDS SEARCHED**

Minimum documentation searched (classification system followed by classification symbols)
Int.Cl⁷ H01M4/66, H01M4/70

Documentation searched other than minimum documentation to the extent that such documents are included in the fields searched
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 9-120818 A (Sony Corp.),<br>06 May, 1997 (06.05.97),<br>Par. Nos. [0051], [0054]<br>(Family: none) | 1,2,4,6,7<br>8-13<br>3,5 |
| X<br>Y<br>A | JP 10-302753 A (Japan Storage Battery Co., Ltd.),<br>13 November, 1998 (13.11.98),<br>Par. Nos. [0024], [0028]<br>(Family: none) | 1,2,4,6,7<br>8-13<br>3,5 |
| Y | JP 5-205746 A (Matsushita Electric Industrial Co., Ltd.),<br>13 August, 1993 (13.08.93),<br>Claim 1; Fig. 1<br>(Family: none) | 9-13 |

☒ Further documents are listed in the continuation of Box C.  ☐ See patent family annex.

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| 11 December, 2002 (11.12.02) | 24 December, 2002 (24.12.02) |

| Name and mailing address of the ISA/<br>Japanese Patent Office | Authorized officer |
|---|---|
| Facsimile No. | Telephone No. |

Form PCT/ISA/210 (second sheet) (July 1998)

21

**INTERNATIONAL SEARCH REPORT**

| International application No. |
| --- |
| PCT/JP02/08715 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-216775 A  (Showa Seiko Kabushiki Kaisha), 02 August, 2002 (02.08.02), Claim 1 (Family: none) | 9-13 |
| Y | JP 10-116621 A  (Sumitomo Electric Industries, Ltd.), 06 May, 1998 (06.05.98), Claim 1; Fig. 1 (Family: none) | 8,13 |

Form PCT/ISA/210 (continuation of second sheet) (July 1998)